# NOUVEAU FASCICULE DE BREVET EUROPEEN

(11) **EP 0 524 092 B2**
(45) Date de publication et mention de la décision concernant l'opposition: **15.12.1999**
(45) Mention de la délivrance du brevet: 02.11.1994
(21) Numéro de dépôt: 92402045.6
(22) Date de dépôt: 16.07.1992
(51) Int. Cl.: B29C 47/02, B60J 10/02

(54) **Procédé et dispositif pour la fabrication d'un article équipé d'un cordon profilé**
Verfahren und Vorrichtung zum Herstellen eines Artikels mit einem Profilstrang
Method and device for making an article with a profiled strip

(30) Priorité: 17.07.1991 DE 4123588
(43) Date de publication de la demande: 20.01.1993
(73) Titulaire: SAINT-GOBAIN VITRAGE, 92400 Courbevoie (FR); VEGLA Vereinigte Glaswerke GmbH, 52066 Aachen (DE)
(72) Inventeur: Cornils, Gerd, W-5161 Merzenich-Girbelsrath (DE); Kunert, Heinz, W-5000 Köln (DE)
(74) Mandataire: Bockhorni, Josef, Dipl.-Ing.

(56) Documents cités:
- EP-A- 0 083 061
- EP-A- 0 421 833
- EP-A- 0 422 516
- GB-A- 1 591 317
- PATENT ABSTRACTS OF JAPAN vol. 14, no. 266 (M-982)(4209) 8 Juin 1990
- Prospectus "Direct Glazing in Automotive Series Production", Sika AG, 1990
- Prospectus "The Revolutionary Nordson Foam Melt 130 Series", Nordson, 1988
- "Rubbery Materials and their Compounds" by J.A. Brydson, published by Elsevier, 1988
- International Rubber Study Group Meeting Proceedings Singapore, 16-21 November 1992 (available from Rapra Technology Limited, Shawbury, Shrewsbury, Shropshire SY4 4NR, U.K.), Ref. A8 p. 141-142
- Handbook of Elastomers, edited by A.K. Bhowmick and H.L. Stephens, published by Marcel Dekker, Inc., 1988, page 309, esp. lines 33 - 36

## Description

L'invention concerne un procédé pour la réalisation d'un objet préfabriqué équipé d'un cordon profilé en polymère lié à l'objet, par exemple pour la fabrication d'un vitrage automobile en verre, monolithique, feuilleté ou revêtu d'un plastique intérieur équipé d'un cadre ou d'une partie de cadre à sa périphérie.

L'invention concerne également un dispositif pour la mise en oeuvre du procédé.

Il est connu d'équiper un vitrage automobile d'un cadre destiné à assurer l'étanchéité et à faciliter la pose du vitrage, le cadre étant fait d'un polymère et constituant avec le vitrage un élément préfabriqué. Ce procédé dit technique RIM (reaction injection molding) est décrit par exemple dans les brevets US 4 139 234 ou EP 0 076 924. Le procédé utilise des polymères à deux composants par exemple des polyuréthanes mais un procédé voisin utilise également des matériaux thermoplastiques tels que le PVC. On peut même utiliser d'autres matériaux du type caoutchouc qui nécessite alors une réticulation ou une vulcanisation directement dans le moule ou dans une phase de production ultérieure.

D'une manière générale, les procédés d'injection sont compliqués et difficiles à mettre en oeuvre pour des séries réduites car pour chaque type de vitrages il est nécessaire de prévoir un moule.

Une autre technique également connue pour poser à la périphérie d'un vitrage un cadre ou une portion de cadre en élastomère consiste à utiliser un robot qui déplace une buse d'extrusion à la périphérie du vitrage afin d'y déposer un profilé constitué d'un polymère qui va réagir pour se transformer en élastomère. Ce procédé est décrit par exemple dans le brevet US 5 057 265. Les polymères adaptés à ce procédé sont par exemple des polyuréthanes mono-composants qui durcissent à l'humidité de l'air. On peut également utiliser des polyuréthanes bicomposants.

Dans tous les cas pour assurer une bonne adhérence de l'élastomère sur le verre on utilise avant le dépôt du polymère un promoteur d'adhérence déposé à la périphérie du vitrage.

Ce procédé connu permet d'équiper des vitrages avec des cadres en élastomère dans des conditions particulièrement économiques.

En effet, lorsqu'on change le vitrage mis en fabrication, il suffit au lieu de développer un nouveau moule, de changer le programme qui définit la trajectoire de la buse telle que la décrit le robot.

Cependant les polymères qu'on utilise dans le procédé précédent nécessitent un certain temps pour leur polymérisation. Ce délai entraîne une phase de production supplémentaire. Par ailleurs, en comparaison avec les techniques d'injection du cadre en une seule opération la technique d'extrusion périphérique pose des problèmes spécifiques à l'endroit où le profilé terminé rejoint le début du profilé, ce qui oblige là aussi à une phase de production supplémentaire.

De plus, les polymères utilisés dans cette technique ne peuvent être réutilisés, ce qui pose le problème de leur recyclage.

L'invention se donne pour tâche de fournir un procédé pour équiper des objets, notamment des vitrages à l'aide de cordons profilés, par exemple pour réaliser des cadres en polymère, qui permet de conserver les avantages du procédé d'extrusion connu tout en raccourcissant le temps de prise du cordon profilé et notamment, dans le cas du vitrage automobile avec un cadre périphérique, en simplifiant le travail de finition de la zone de raccordement en début et fin du profilé.

Selon l'invention, après traitement de la surface de l'objet un élastomère thermoplastique utilisant une polyoléfine thermoplastique et un élastomère formant une structure interpénétrée alimente, à partir d'une extrudeuse par l'intermédiaire d'un tuyau à pression chauffant, une tête d'extrusion chauffante guidée automatiquement à la surface de l'objet par un robot selon une trajectoire déterminée, et est extrudé par la tête d'extrusion.

L'élastomère thermoplastique est de préférence du type alliage à structure interpénétrée formé d'une polyoléfine thermoplastique et d'un élastomère, en particulier l'alliage d'une polyoléfine isotactique telle qu'un polypropylène, chargée d'EPDM.

Le procédé de l'invention s'applique à un vitrage automobile fait d'un verre monolithique ou feuilleté ou revêtu intérieurement de plastique, le cordon profilé constituant un cadre ou un élément de cadre périphérique. De préférence, dans ce cas on utilise comme promoteur d'adhérence pour le prétraitement du verre un système polyuréthane modifié dissous dans un solvant chloré.

L'invention concerne également un procédé pour réaliser d'autres objets préfabriqués équipés de cordons extrudés qui servent de joints comme par exemple un vitrage isolant ou une porte ou une fenêtre d'un bâtiment ou encore, une porte ou un élément d'appareils ménagers ou bien une pièce automobile telle qu'une portière, un capot, un carter...

Le procédé de l'invention présente des avantages par rapport au procédé qui utilise des polymères réagissant au moment de la mise en oeuvre.

C'est ainsi tout d'abord que la phase de durcissement du polymère extrudé n'existe plus. En effet, l'élastomère thermoplastique durcit dès qu'il est refroidi, cela a pour conséquence un raccourcissement sensible de la curée de mise en oeuvre du procédé.

De plus, l'utilisation de polymères réagissant lors de leur mise en oeuvre entraîne des difficultés lorsqu'on arrête le procédé. A ce moment-à les polmyères prennent en masse et il est impossible de nettoyer les endroits où ils sont demeurés tels que par exemple les buses ou les tubes d'alimentation. Avec les thermoplastiques, il n'est plus nécessaire de nettoyer tous les endroits où la réaction risque de se produire car il suffira après durcissement de les réchauffer afin de remettre tout le système en état de fonctionnement.

Par ailleurs, l'utilisation d'un polymère thermoplastique permet de simplifier beaucoup, en particulier, dans le cas des vitrages automobiles, le traitement de la zone de raccord entre la fin et le début du profilé. 11 suffit d'utiliser un outil qui presse à chaud la zone concernée à n'importe quel moment postérieur à la mise en oeuvre du profilé pour pouvoir lui donner la forme souhaitée.

Un dernier avantage très important réside dans le fait que non seulement les restes des produits non utilisés peuvent servir à nouveau mais également que lorsqu'un objet équipé du cordon thermoplastique sera ferraillé, il sera possible de récupérer les matériaux thermoplastiques afin de les recycler d'une manière ou d'une autre sans aucune difficulté.

L'invention concerne également un dispositif pour mettre en oeuvre le procédé, il comporte une tête d'extrusion guidée par un robot équipée d'un chauffage électrique, une extrudeuse et un tuyau chauffant résistant à la pression reliant le corps de l'extrudeuse et la tête d'extrusion et également une centrale de commande qui gère le fonctionnement du robot et de l'extrudeuse. Dans une variante, il comporte également un ou plusieurs joints tournants au début et/ou à la fin du tuyau chauffant.

Ainsi, pour mettre en oeuvre le procédé de l'invention on utilise des extrudeuses à vis classiques dans lesquelles on a prévu des résistances chauffantes qui entourent la partie cylindrique contenant la vis. Ces résistances permettent de stabiliser la température de l'extrudeuse à la valeur permettant une extrusion dans de bonnes conditions. A la sortie de l'extrudeuse, on a installé un tube flexible chauffant qui est prévu pour résister aux très hautes pressions qui correspondent à la viscosité du matériau thermoplastique au moment où on le met en oeuvre.

Ainsi, le tuyau souple chauffant conduit l'élastomère fondu jusqu'à une buse d'extrusion qui est elle aussi équipée d'un chauffage qui garantit que la température de mise en oeuvre de l'élastomère fondu est maintenu. La tête d'extrusion est mobile et c'est un robot qui la déplace sur la trajectoire selon laquelle on veut déposer le profilé. Ce sera par exemple la périphérie d'un vitrage automobile.

On a obtenu de bons résultats avec les élastomères du type alliage à structure interpénétrée formé d'une polyoléfine thermoplastique et d'un élastomère, en particulier l'alliage d'une polyoléfine isotactique telle qu'un polypropylène, chargée de caoutchouc de monomère d'éthylène-propylène-diène (EPDM). En particulier les produits Santoprène de la Société MONSANTO spécialement le Santoprène A type 111-64. De tels caoutchoucs thermoplastiques ont une température de travail de 180 à 230°C. C'est à cette température qu'il faut stabiliser la température de l'extrudeuse, de la sortie d'extrudeuse ainsi que du tuyau chauffant flexible et de la buse d'extrusion proprement dite.

Pour obtenir une adhérence de qualité aussi bien sur la surface nue ou la surface traitée de l'objet par exemple sur la couche d'émail qui peut avoir été déposée à la surface du verre d'un vitrage automobile il convient de traiter cette surface avec un promoteur d'adhérence adapté au matériau sur lequel on le dépose. En ce qui concerne le verre des polyuréthanes modifiés en solvants chlorés se sont montrés particulièrement adaptés pour l'adhérence des polyuréthanes du type qu'on vient de décrire.

Le procédé de l'invention proprement dit va être décrit maintenant à l'aide des figures.

Parmi celles-ci :

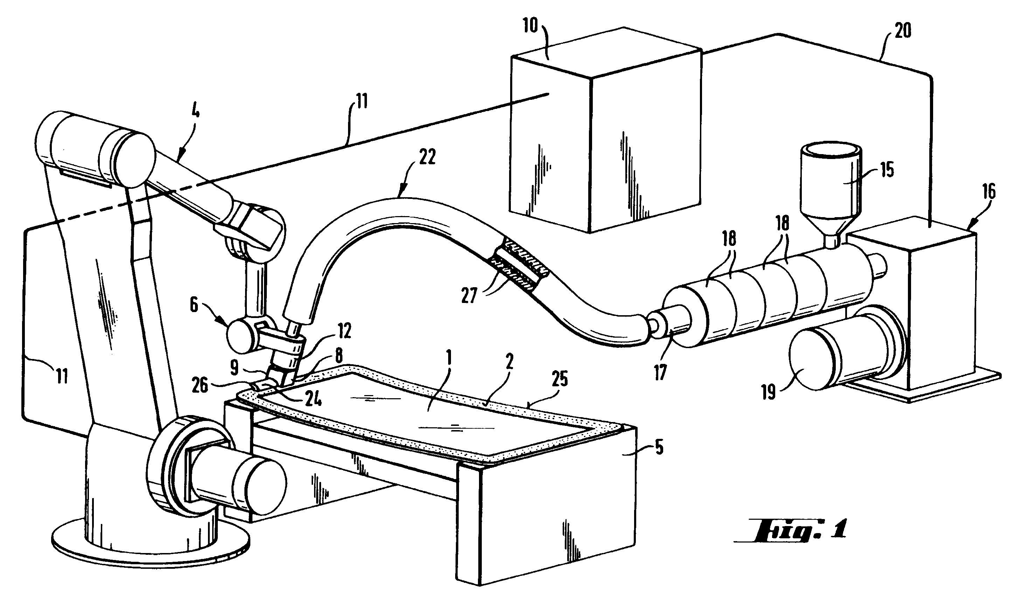

- la figure 1 présente une installation adaptée à la mise en oeuvre du procédé sur un vitrage automobile,
- la figure 2 présente un détail agrandi de la figure 1,
- la figure 3 montre une coupe du bord d'un vitrage prêt à la pose.
- la figure 4 montre une coupe du bord d'un vitrage équipé.

Le vitrage 1 le long du bord duquel on doit déposer un profilé en élastomère thermoplastique est équipé au bord de sa surface à l'emplacement où le profilé doit être extrudé d'une couche 2 en forme de cadre qui est constituée d'un émail opaque qui a subi une cuisson par exemple au cours du bombage du verre. Dans un premier temps, on nettoie soigneusement la surface de cette couche 2 puis on y dépose un promoteur d'adhérence. Comme promoteur d'adhérence de très bons résultats ont été obtenus avec un système de polyuréthane a deux composants modifiés. Il est utilisé en phase solvant. Il s'agit par exemple d'un mélange de trichloréthylène de 1,1,1-trichlorétane et de chlorure de méthylène. C'est ainsi que le produit X 8310 de la Société HENKEL et le produit AK 290 de la Société KÖMMERLING se sont avérés convenir parfaitement.

Après avoir subi le traitement préparatoire qu'on vient de décrire, le vitrage est transporté dans la zone de travail du robot 4 sur une table 5.

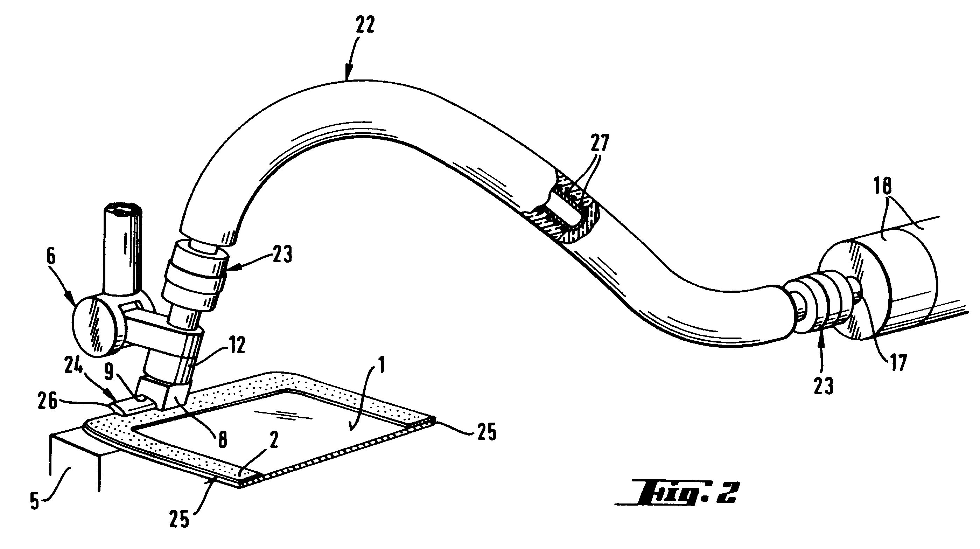

La "main" 6 du robot 4 tient la tête d'extrusion 8 équipée d'une ouverture calibrée 9 dont la section correspond à celle du profilé à déposer sur le vitrage (figure 2).

La tête d'extrusion 8 est transportée et conduite par le robot 4 conformément à un itinéraire programmé tout le long du bord du vitrage 1. Pour réaliser ce travail le robot 4 reçoit ses ordres d'une unité de commande 10 par l'intermédiaire des liaisons électriques 11. La tête d'extrusion 8 est équipée d'un élément chauffant 12. Celui-ci lui permet d'être maintenue à la température nécessaire à l'extrusion du thermoplastique fondu qui est par exemple de 200°C.

L'extrudeuse à vis 16 est alimentée à partir du réservoir 15 par des granulés qui seront ensuite fondus dans le corps de l'extrudeuse 16 où règne une pression très élevée. Le corps cylindrique 17 de l'extrudeuse 16 est équipé de plusieurs manteaux chauffants 18 qui leur permettent grâce à des résistances de chauffer le corps 17 et donc tout ce qui s'y trouve à savoir la vis de l'extrudeuse et surtout le matériau thermoplastique. Le moteur 19 de l'extrudeuse 16 est lui aussi commandé à partir de l'unité centrale grâce à une liaison 20.

Entre le corps 17 de l'extrudeuse 16 et la tête d'extrusion 8 la liaison est assurée par un tuyau souple haute pression 22 lui aussi chauffé électriquement. Le tuyau haute pression 22 doit être capable de supporter des pressions de l'ordre de 250 bars avec des températures très élevées. Pour cela il est équipé de résistances chauffantes 27 qui lui permettent de se stabiliser à une température par exemple de 200°C. Mais le tuyau haute pression 22 doit être suffisamment flexible de manière à permettre un déplacement libre de la tête d'extrusion 8 sans que son mouvement soit en rien modifié par rapport au programme préétabli tel qu'il est transmis à partir de l'unité centrale 10 au robot 4.

Il se trouve que les qualités précédentes sont difficiles à réunir en même temps qu'une facilité de torsion pour le tuyau 22. L'absence de liberté de torsion du tuyau 22 n'est pas acceptable car elle empêche le respect du programme préétabli pour la trajectoire de la buse d'extrusion. Il s'agit pourtant là d'une nécessité car lorsqu'on dépose un cadre complet autour d'un objet, en particulier, un vitrage automobile, à la fin, lorsque le périple est terminé la tête a tourné de 360° sur elle-même. Cette torsion doit être assumée par le tuyau souple 22. Même si le tuyau 22 possédait la souplesse en torsion nécessaire, le fait de subir en permanence ces torsions répétées userait très rapidement le tuyau 22.

Pour éviter cette usure prématurée et les réactions sur la tête d'extrusion 8, on a prévu d'équiper le tuyau 22 de raccords tournants 23 tels qu'ils sont représentés sur la figure 2. De préférence, on installera l'un de ces raccords tournants 23 immédiatement sur la "main" 6 du robot tandis qu'un deuxième sera installé entre le corps 17 de l'extrudeuse 16 et le tuyau haute pression souple 22. Ces raccords tournants doivent avoir des performances qui correspondent aux caractéristiques des thermoplastiques utilisés. Ainsi, pour être utilisable avec des élastomères thermoplastiques qui viennent d'être décrits à base de polyoléfine comme le polypropylène isotactique et d'éthylène-propylène-diène-caoutchouc il faut qu'ils puissent soutenir en permanence des températures de l'ordre de 200°C et des pressions pouvant monter à 500 bars.

Par ailleurs pour éviter les pertes de charge, il convient que leur diamètre intérieur soit suffisamment grand.

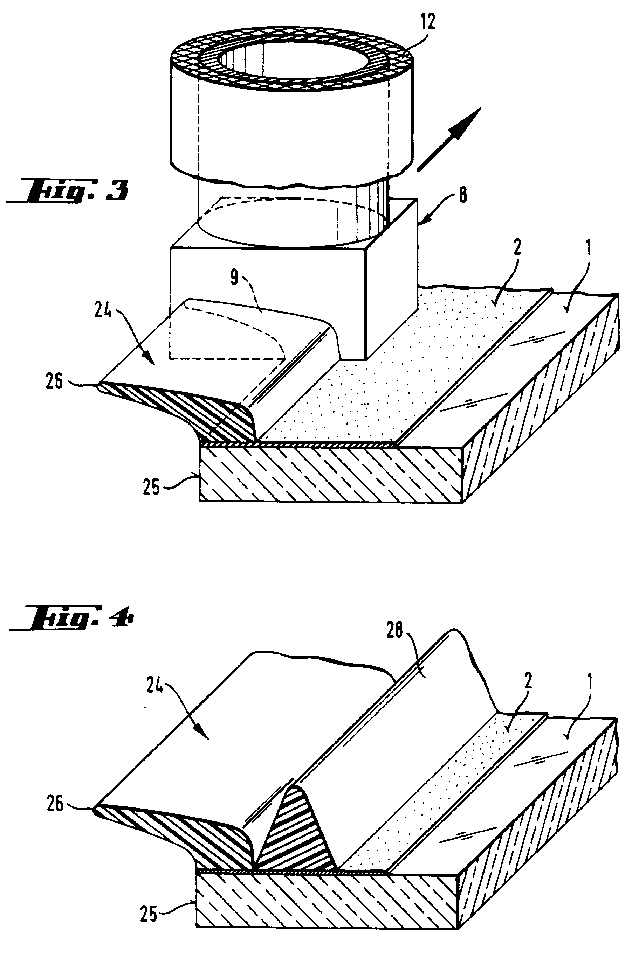

Le dispositif qu'on vient de décrire permet de déposer à la périphérie d'un vitrage un produit tel que le Santoprène A type 111-64 de la Société MONSANTO sous la forme d'un profilé collé par l'intermédiaire d'un promoteur d'adhérence sur un cadre émaillé. C'est ce qu'on voit figure 3.

Dans ce cas-là le profilé 24 déborde de la périphérie 25 du vitrage 1. Il possède en effet une lèvre 26 qui joue à la fois un rôle d'étanchéité et un rôle de centrage. Lorsque l'on place le vitrage dans la baie de la carrosserie automobile, cette lèvre élastique 26 vient recouvrir le chant du verre du vitrage 1 qu'il protège et en même temps permet le centrage du vitrage dans la baie. Par ailleurs, la lèvre 26 permet de cacher et de remplir l'espace qui se trouve entre la périphérie 25 du vitrage et la carrosserie. On peut à la place du profilé en forme de lèvre imaginer un profilé creux qui jouera le même rôle.

La technique de l'invention permet ainsi d'équiper un objet, en particulier un vitrage automobile de profilés en élastomère qui adhèrent fortement à l'objet. Dans le cas d'un vitrage automobile, un vitrage ainsi équipé constitue un semi-produit qu'il sera ensuite très facile de coller à l'intérieur d'une carrosserie.

Sur la figure 4 on voit représentée une coupe du bord d'un vitrage ainsi équipé. On voit en 25 le bord du vitrage 1, vitrage sur lequel un cadre en émail 2 a été déposé lors de la fabrication. La technique de l'invention a permis de déposer à la périphérie du vitrage le profilé 24 avec sa lèvre 26 constitué d'un élastomère thermofusible. Le vitrage ainsi préfabriqué généralement dans l'usine verrière est ensuite emballé, stocké, transporté dans l'usine de montage automobile dans laquelle il va être collé à l'intérieur de la carrosserie. L'opération de montage s'effectue donc par le dépôt d'un cordon de colle 28 posé directement sur le promoteur d'adhérence qui recouvre l'émail 2.

Lors de l'installation du vitrage dans la carrosserie le joint 24 avec sa lèvre 26 va jouer un rôle multiple et en particulier il va permettre de maintenir le vitrage en place en attendant que la colle 28 qui joint le vitrage à la carrosserie puisse durcir et assurer la position définitive et la liaison permanente entre le vitrage et carrosserie.

La méthode et le dispositif qui viennent d'être décrits en détail dans le cas du dépôt d'un joint de vitrage automobile sont applicables de la même manière, chaque fois que l'on désire déposer un profilé en élastomère à la surface d'un objet en utilisant la technique de l'extrusion in situ. Ce sera le cas par exemple dans l'industrie automobile pour les joints de portière, de capot, de toit ouvrant, de coffre... Pour les appareils ménagers, la technique peut s'utiliser également pour les joints de porte de réfrigérateur, de machine à laver. Dans le bâtiment la technique peut s'appliquer de même à la fabrication de vitrages isolants à des joints de porte, de fenêtre, etc.. et dans l'industrie en général à des joints de couvercle, d'opercule, de tuyauteries, de carter, etc.. Dans le textile ou l'habillement, on l'appliquera à des fermetures de vêtements, à des étanchéités pour bottes, à des éléments de renfort et autres...

Dans chacune des applications précédentes, le primage préparatoire au dépôt du joint extrudé sera utile et souvent nécessaire. La recherche du promoteur d'adhérence adapté à chaque cas relève des compétences de l'homme du métier.

## Revendications

1. Procédé pour la fabrication d'un objet (1) préfabriqué avec un cordon profilé (24) en polymère extrudé par une tête d'extrusion (8) guidée automatiquement à la surface de l'objet (1) par un robot (4) selon une trajectoire déterminée, caractérisé en ce qu'après traitement de la surface de l'objet (1), on alimente la tête d'extrusion (8) en élastomère thermoplastique utilisant une polyoléfine thermoplastique et un élastomère formant une structure interpénétrée, par l'intermédiaire d'un tuyau à pression (22), et en ce qu'on chauffe l'élastomère thermoplastique lors de son passage dans le tuyau (22) et dans la tête d'extrusion (8).

2. Procédé selon la revendication 1, caractérisé en ce qu'on utilise comme élastomère thermoplastique und polyoléfine isotactique telle qu'un polypropylène chargée EPDM.

3. Procédé selon la revendication 1 ou 2, caractérisé en ce que l'objet (1) est un vitrage automobile fait d'un verre monolithique ou feuilleté ou revêtu intérieurement de plastique et en ce que le cordon profilé (24) constitue un cadre ou un élément de cadre périphérique.

4. Procédé selon la revendication 3, caractérisé en ce qu'on utilise comme promoteur d'adhérence pour le prétraitement du verre un système polyuréthane modifié dissous dans un solvant chloré.

5. Procédé selon la revendication 1 ou 2, caractérisé en ce que l'objet (1) est un vitrage isolant ou une porte ou une fenêtre d'un bâtiment et en ce que le cordon profilé (24) est un joint d'étanchéité.

6. Procédé selon la revendication 1 ou 2, caractérisé en ce que l'objet (1) est une porte ou un élément d'appareils ménagers et en ce que le cordon profilé 24) est un joint.

7. Procédé selon la revendication 1 ou 2, caractérisé en ce que l'objet (1) est une pièce d'automobile telle qu'une portière, un capot, un carter... et en ce que le cordon profilé (24) est un joint.

8. Dispositif d'extrusion pour mettre en oeuvre le procédé de la revendication 1, comportant une extrudeuse (16), un corps d'extrusion (17) et une tête d'extrusion (8) guidée par un robot (4) et une centrale de commande (10) qui gère le fonctionnement du robot (4) et de l'extrudeuse (16), caractérisé en ce que la tête d'extrusion (8) est équipée d'un moyen de chauffage (12), et en ce qu'un tuyau chauffant résistant à la pression (22) relie le corps (17) de l'extrudeuse (16) et la tête d'extrusion (8).

9. Dispositif selon la revendication 8, caractérisé en ce qu'il comporte également un ou plusieurs joints tournants (23) au début et/ou à la fin du tuyau chauffant (22).

## Claims

1. Method for the production of an object (1), prefabricated with a profiled cord (24) of polymer extruded by an extrusion head (8) guided automatically at the surface of the object (1) by a robot (4) along a determined trajectory, characterized in that, after treatment of the surface of the object (1), the extrusion head (8) is supplied with thermoplastic elastomer using a thermoplastic polyolefin and an elastomer forming an interpenetrated structure by means of a pressure pipe (22), and in that the thermoplastic elastomer is heated during ist passage through the pipe (22) and through the extrusion head (8).

2. Method according to Claim 1, characterized in that there is used, as thermoplastic elastomer an isotactic polyolefin such as an EPDM filled polypropylene.

3. Method according to Claim 1 or 2, characterized in that the object (1) is an automobile pane made of a monolithic or laminated glass or a glass faced internally with plastics, and in that the profiled cord (24) constitutes a peripheral frame or frame element.

4. Method according to Claim 3, characterized in that there is used, as primer for the pretreatment of the glass, a modified polyurethane system dissolved in a chlorinated solvent.

5. Method according to Claim 1 or 2, characterized in that the object (1) is an insulating pane or a door or a window of a building, and in that the profiled cord (24) is a seal.

6. Method according to Claim 1 or 2, characterized in that the object (1) is a door or an element of household equipment and in that the profiled cord (24) is a seal.

7. Method according to Claim 1 or 2, characterized in that the object (1) is an automobile component such as a door, a bonnet (hood), a casing or box, etc., and in that the profiled cord (24) is a seal.

8. Extrusion device for carrying out the method according to Claim1, comprising an extruder (16), an extrusion body (17) and an extrsuion head (8), guided by a robot (4), and a central controller (10) which controls the operation of the robot (4) and of the extruder (16), characterized in that the extrusion head (8) is equipped with a heating means (12) and in that a pressure-resistant heating pipe (22) connects the body (17) of the extruder (16) to the extrusion head (8).

9. Device according to Claim 8, characterized in that it comprises also one or more revolving seals (23) at the start and/or at the end of the heating pipe (22).

## Patentansprüche

1. Verfahren zur Herstellung eines mit einem durch einen Extrusionskopf (8) extrudierten Profilstrang (24) aus einem Polymer vorgerüsteten Gegenstandes (1), bei dem der Extrusionskopf durch einen Roboter (4) nach einer bestimmten Bahn automatisch über die Oberfläche des Gegenstandes (1) geführt wird, dadurch gekennzeichnet, daß nach Behandlung der Oberfläche des Gegenstandes (1) dem Extrusionskopf (8) über einen Druckschlauch (22) ein thermoplastisches Elastomer unter Verwendung eines thermoplastischen Polyolefins und eines Elastomers, die eine interpenetriernde Netzwerkstruktur bilden, zugeführt wird, und daß das thermoplastische Elastomer auf seinem Weg in dem Schlauch (22) und in dem Extrüsionskopf (8) erhitzt wird.

2. Verfahren nach Anspruch 1, **dadurch gekennzeichnet, daß** als thermoplastisches Elastomer ein isotaktisches Polyolefin wie beispielsweise ein mit EPDM kombiniertes Polypropylen verwendet wird.

3. Verfahren nach Anspruch 1 oder 2, **dadurch gekennzeichnet, daß** der Gegenstand (1) eine Autoglasscheibe aus einer monolithischen Glasscheibe oder einer Verbundglasscheibe oder einer innen mit einem Kunststoffüberzug versehene Glasscheibe ist, und daß der Profilstrang (24) einen Rahmen oder ein rahmen Element bildet.

4. Verfahren nach Anspruch 3, dadurch gekennzeichnet, daß als Haftvermittler für die Vorbehandlung des Glases ein in einem chlorierten Lösungsmittel gelostes modifiziertes Polyurethan-System verwendet wird.

5. Verfahren nach Anspruch 1 oder 2, **dadurch gekennzeichnet, daß** der Gegenstand (1) eine Isolierglasscheibe oder eine Tür oder ein Fenster für ein Gebäude und der Profilstrang (24) eine Dichtung ist.

6. Verfahren nach Anspruch 1 oder 2, dadurch gekennzeichnet, daß der Gegenstand (1) eine Tür oder ein Element eines Küchengerätes und der Profilstrang (24) eine Dichtung ist.

7. Verfahren nach Anspruch 1 oder 2, **dadurch gekennzeichnet, daß** der Gegenstand (1) ein Teil eines Automobils, beispielweise eine Tür, eine Abdeckhaube, ein Gehäuse ..., und der Profilstrang (24) eine Dichtung ist.

8. Extrusionsvorrichtung zur Durchführung des Verfahrens nach Anspruch 1, mit einem Extruder (16), einem Extruderkörper (17), einem von einem Roboter (4) geführten Extrusionskopf (8) und einer die Funktionen des Roboters (4) und des Extruders (16) steuernden Steuereinheit (10), dadurch gekennzeichnet, daß der Extrusionskopf (8) mit einem Mittel zur Beheizung (12) versehen ist, und daß ein heizbarer Druckschlauch (22) den Extruderkörper (17) des Extruders (16) mit dem Extrusionskopf (8) verbindet.

9. Vorrichtung nach Anspruch 8, **dadurch gekennzeichnet, daß** sie ferner ein oder mehrere Drehgelenke (23) am Anfang und/oder am Ende des heizbaren Schlauches (22) umfaßt.
